# EUROPÄISCHE PATENTANMELDUNG

(11) **EP 1 284 572 A2**
(43) Veröffentlichungstag der Anmeldung: **19.02.2003**
(21) Anmeldenummer: 02102022.7
(22) Anmeldetag: 11.07.2002
(51) Int. Cl.: H04L 29/06

(54) **Verfahren und Vorrichtung zum Herstellen einer Kommunikationsverbindung**

(30) Priorität: 13.08.2001 DE 10139745
(71) Anmelder: SIEMENS AKTIENGESELLSCHAFT, 80333 München (DE)
(72) Erfinder: Jerbi, Belhassen, 81825, München (DE); Laumen, Josef, 31141 Hildesheim (DE); Schmidt, Andreas, 38114 Braunschweig (DE); Trauberg, Markus, 38159 Velchede (DE); Van Niekerk, Sabine, 38228 Salzgitter (DE)

(57) **Zusammenfassung**

Erfindungsgemäß ist ein Verfahren zum Herstellen einer Kommunikationsverbindung zwischen einem ersten Endgerät (T1, T2, T3, T4), das mit einem auf einem Internet-Protokoll basierendem Netzwerk (IP) verbunden ist, und einem zweiten Endgerät (T1, T2, T3, T4), das ebenso mit einem auf einem Internet-Protokoll basierendem Netzwerk (IP) verbunden ist, offenbart. Gemäß dem Verfahren wird dabei ein Speichermedium (SC), auf dem die IP-Adresse des zweiten Endgeräts gespeichert ist, mit dem ersten Endgerät verbunden. Anschließend wird von dem Speichermedium die IP-Adresse des zweiten Endgeräts eingelesen und schließlich eine Kommunikationsverbindung über das Netzwerk mittels der gelesenen IP-Adresse von dem ersten Endgerät zu dem zweiten Endgerät hergestellt. Dadurch, dass die IP-Adressen der Endgeräte eines Benutzers auf dem Speichermedium gespeichert sind, muss der Benutzer zum Herstellen einer Kommunikationsverbindung zwischen zwei seiner Endgeräte nur das Speichermedium in eines der Endgeräte einführen, wobei automatisch die IP-Adresse des weiteren Endgeräts für die Kommunikationsverbindung ausgelesen wird, ohne das sich der Benutzer eine der IP-Adressen merken muss.

## Beschreibung

Die Vorliegende Erfindung betrifft ein Verfahren zum Herstellen einer Kommunikationsverbindung, sowie ein Speichermedium und ein Endgerät zur Umsetzung des Verfahrens.

Das Internet wird in den vergangenen Jahren immer stärker als ein Medium zur Übertragung von Daten beliebigen Formats und Inhalts angenommen. Dabei wird ferner auf eine Vereinigung von mobiler Kommunikation in Wort und jeder sonstigen Form von Daten nach allen Standards hingewirkt, um beispielsweise Multimedianachrichten (MM) über einen Multimedia Messaging Service (MMS) übertragen zu können. Somit wird auch Mobilfunkgeräten neben ihrer mobilen Sprachübertragung auch ein Internet-Zugang gegeben.

In einem Kommunikationssystem, wie dem Internet, hat jeder Host und jeder Router seine eigene Adresse nach dem Internet-Protokoll, die sogenannte IP-Adresse, die nun zusätzlich zu den bekannten Kennungen einer Mobilfunkverbindung verarbeitet und/oder verwaltet werden muss. In der IP-Adresse (Internet-Protokoll-Adresse) sind eine Netzwerk-Nummer und eine Host-Nummer kodiert enthalten. Eine jeweilige Kombination ist als IP-Adresse einzigartig bzw. eineindeutig. Das heißt, dass keine zwei Hosts oder Router existieren können, die die gleiche IP-Adresse haben.

Gemäß dem Standard des Internet-Protokolls der Version 4 (IPv4) besteht die IP-Adresse aus einem 32-Bit bzw. 4-Oktet-Adressenfeld. Diese Adresse kann in zwei Teile eingeteilt werden:
- Einen Netzwerkteil, der das Netzwerk bezeichnet, zu dem der Host gehört und
- Einen Host-Teil, der den Host selber identifiziert.

Hosts, die an dem selben Netzwerk angeschlossen sind, müssen den selben Teil zur Kennzeichnung des Netzwerkes aufweisen, sich aber durch unterschiedliche Bits im jeweiligen Host-Teil ihrer Adresse unterscheiden. IP-Adressen werden üblicherweise in dezimaler Notation mit Unterteilung durch Punkte geschrieben. Der dezimale Wert jedes der vier Oktetts ist nachfolgend mit trennenden Punkten angegeben. Als Beispiel wird die 32-Bit IP-Adresse in binärer Darstellung 11000011.00100010.00001100.00000111 nachfolgend in der Dezimaldarstellung als 195.34.12.7 geschrieben. Es ist selbstverständlich, dass bei der stetig steigenden Zahl von Internet-Nutzern eine IP-Adresse mit einer Länge von nur 32-Bit nicht ausreicht, um jedem Teilnehmer eine eigene individuelle Kennung zuweisen zu können.

Dementsprechend wird ein neuer Internet-Protokoll-Standard der Version 6 (Ipv6) entwickelt, nach dem IP-Adressen die vierfache Länge einer 32-Bit Ipv4-Adresse umfassen, nämlich 128 Bit. Damit wird es in naher Zukunft für gewisse Zeitdauer möglich sein, bei der Nutzung des Internet-Protokolls jedem Endgerät, ob mobil oder stationär, eine eigene IP-Adresse zuzuweisen, die einzigartig und eineindeutig ist.

Durch diese Möglichkeit, jedem Endgerät eine eigene IP-Adresse zuzuordnen, über die zwischen mehreren Endgeräten eine Kommunikationsverbindung herstellbar ist, wird ein Benutzer die Möglichkeit haben, Daten zwischen den Endgeräten auszutauschen, die weit voneinander entfernt sein können. Das Herstellen einer derartigen Kommunikationsverbindung für eine Datenübertragung wird sich jedoch für einen Benutzer als aufwendig herausstellen, da er derzeit keine Möglichkeit hat, die jeweiligen Kennungen bzw. IP-Adressen der zum Datenaustausch verwendeten Endgeräte auf ihm zugeordneten Speichermedien, wie einer SIM-(SIM: Subscriber Identity Module = Teilnehmer-Identitätsmodul)-Karte oder einem anderen Speichermedium zu speichern, und er somit die jeweiligen IP-Adressen jedes mal neu eingeben muss.

Demgemäss liegt der folgenden Erfindung die Aufgabe zugrunde, ein Verfahren und eine Vorrichtung zu schaffen, durch die auf einfache Weise eine Kommunikationsverbindung zwischen zwei Endgeräten herstellbar ist.

Diese Aufgabe wird hinsichtlich des Verfahrens durch die Merkmale des Anspruches 1, hinsichtlich eines Speichermediums durch die Merkmale des Anspruches 6, und hinsichtlich eines Endgerätes durch die Merkmale des Anspruches 10 gelöst. Vorteilhafte Ausgestaltungen der Erfindung sind Gegenstand der Unteransprüche.

Bei einem erfindungsgemäßen Verfahren zum Herstellen einer Kommunikationsverbindung zwischen einem ersten Endgerät, das mit einem auf einem Internet-Protokoll basierenden Netzwerk bzw. Kommunikationsnetz verbunden ist, und einem zweiten Endgerät, das mit dem auf einem Internet-Protokoll basierenden Netzwerk verbunden ist und das eine eigene IP-Adresse aufweist, wird zuerst die IP-Adresse des zweiten Endgeräts von einem Speichermedium in das erste Endgerät übertragen. Dabei kann das Speichermedium, insbesondere in der Form eines tragbaren Speichermediums, mit dem ersten Endgerät verbunden werden und die IP-Adresse des zweiten Endgeräts von dem Speichermedium gelesen werden. Ferner wird mittels der übertragenen bzw. gelesenen IP-Adresse eine Kommunikationsverbindung über das auf einem Internet-Protokoll basierenden Netzwerk von dem ersten Endgerät zu dem zweiten Endgerät aufgebaut.

Gemäß einem Aspekt der Erfindung umfasst ein Speichermedium, das insbesondere zum Umsetzen des erfindungsgemäßen Verfahrens geeignet ist, eine Speichereinrichtung zum Speichern einer oder mehrerer IP-Adressen von Endgeräten, die mit einem auf einem Internet-Protokoll basierenden Netzwerk verbindbar sind. Gemäß einer vorteilhaften Ausgestaltung kann das Speichermedium als eine intelligente Speicherkarte ausgebildet sein. Eine derartige Speicherkarte kann ohne großen Aufwand in ein Kommunikationsgerät bzw. Teilnehmer-Endgerät eingeführt und aus diesem entfernt werden, wodurch ein leichter Zugriff auf die in der Speicherkarte gespeicherten Kennungen oder IP-Adressen weiterer Endgeräte ermöglicht wird. Dabei kann als die intelligente Speicherkarte oder "Smart Card" eine SIM-Karte oder eine UICC (UICC: Universal Integrated Circuit Card) mit einer USIM-(USIM: UMTS - Subscriber Identity Module = UMTS-Teilnehmeridentitts-Modul)-Anwendung vorgesehen sein. Da diese Speicherkarten herkömmlicherweise dafür vorgesehen sind, in ein mobiles Telefon hineingesteckt zu werden, ist auf ihnen keine Speichermöglichkeit für eine IP-Adresse für ein Endgerät, das mit einem auf einem Internet-Protokoll basiert und mit einem Netzwerk verbindbar ist, bekannt.

Jedoch besteht ein Vorteil bei der Verwendung derartiger Speicherkarten darin, dass eine SIM-Karte oder UICC-Karte immer in jedem einzelnen Telefon basierend auf dem GSM-(Global System for Mobile Communikations)- oder dem UMTS-(Universal Mobile Telecommunication Service)-Standard einsetzbar ist. Das heißt, dass ein zum Abspeichern einer IP-Adresse genutztes Datenformat und ein Mechanismus zum Abrufen dieser Daten von jedem einzelnen IP-fähigen GSM- oder UMTS-Telefon, unabhängig von einem jeweiligen Hersteller, verstanden wird, da die Datenformate und Abrufbedingungen für die SIM- und USIM/UICC standardisiert sind.

Nach dem GSM-Standart werden die zur Umsetzung des erfindungsgemäßen Verfahrens vorgesehenen intelligenten Speicherkarten als SIM-Karten bezeichnet, wobei beim UMTS zwischen der physikalisch vorhandenen Karte UICC und ihrer USIM genannten logischen Funktion unterschieden wird. Dabei wird eine IP-Adresse also in einer SIM-Karte oder in der USIM-Anwendung auf einer UICC-Karte gespeichert. Mobile Kommunikationsdienste der zweiten Generation, wie beispielsweise nach dem GSM-Standard, und der dritten Generation, wie beispielsweise nach dem UMTS-Standard, verwenden zusätzlich zu den Mobiltelefonen selber genau spezifizierte intelligente Karten (Smart Cards). In ein Mobiltelefon eingeschoben befähigen diese Smart Cards einen Anwender zur Benutzung eines Kommunikationsdienstes, bei dem er angemeldet ist. Darüber hinaus können bereits heute benutzerspezifische Informationen, wie beispielsweise die Telefonnummer des Benutzers (MSISDN: Mobile Station ISDN Number), ein Benutzertelefonbuch, usw. auf einer Smart Card gespeichert werden. Insofern wird erfindungsgemäß die bereits vorhandene Infrastruktur von Teilnehmer-Endgeräten dahingehend erweitert, dass von einem beliebigen Teilnehmer-Endgerät eine auf einer Smart Card gespeicherte IP-Adresse eines weiteren Endgerätes, das mit einem auf ein Internet-Protokoll basierenden Netzwerk verbindbar ist, gelesen und mittels dieser auf einfache Weise eine Kommunikationsverbindung herstellbar ist.

Die Kommunikationsverbindung kann dabei derart genutzt werden, dass Daten zwischen den Endgeräten übertragen werden, insbesondere auch Software von einem auf das andere Gerät heruntergeladen werden kann, oder auch derart, ein Endgerät von einem anderen Endgerät aus fernzusteuern oder zu verwalten, (durch "remote login" bzw. "remote control").

Das erfindungsgemäße Verfahren kann durch eine Vorrichtung bzw. ein Endgerät umgesetzt werden, das mit einem auf einem Internet-Protokoll basierendem Netzwerk verbindbar ist. Dabei hat das Endgerät eine Leseeinrichtung zum Lesen der auf dem Speichermedium gespeicherten IP-Adresse eines weiteren Endgerätes, das auch mit einem auf einem Internet-Protokoll basierenden Netzwerk verbindbar ist, sowie eine Kommunikationseinrichtung zum Herstellen einer Kommunikationsverbindung mit dem weiteren Endgerät mittels der gelesenen IP-Adresse.

Gemäß einer vorteilhaften Ausgestaltung weist das Endgerät eine Schreibeinrichtung zum Speichern einer IP-Adresse auf das Speichermedium auf. Dabei kann entweder die IP-Adresse des Endgerätes selbst oder die IP-Adresse eines weiteren Endgerätes, mit dem eine Kommunikationsverbindung hergestellt werden soll, gespeichert werden. Eine IP-Adresse kann dabei zuvor über eine Eingabeeinrichtung, die mit dem Endgerät verbunden oder mit diesem integriert ist, von einem Benutzer manuell eingegeben werden, und dann automatisch oder auf Anweisung eines Benutzers auf das Speichermedium gespeichert werden. Zum anderen kann, insbesondere in dem Fall, bei dem die IP-Adresse des Endgeräts selbst auf dem Speichermedium gespeichert werden soll, ein automatisches Speichern der IP-Adresse des Endgeräts selbst auf dem gerade mit dem Endgerät verbundenen Speichermedium realisiert werden. Dazu weist das Endgerät gemäß einer vorteilhaften Ausgestaltung eine Überprüfungseinrichtung auf, die überprüft, ob auf dem mit dem gerade verbundenen Speichermedium eine IP-Adresse speicherbar ist. Ist das Ergebnis der Überprüfung positiv, so wird die IP-Adresse des Endgeräts, die beispielsweise in einem nichtflüchtigen Speicher des Endgeräts abgelegt ist, mittels der Schreibeinrichtung auf das Speichermedium übertragen. Es ist jedoch auch denkbar, dass in dem Fall eines positiven Überprüfungsergebnisses, d. h. wenn eine IP-Adresse auf dem Speichermedium speicherbar ist, die Überprüfungseinrichtung beispielsweise mittels einer Anzeige oder dergleichen einen Benutzer um Bestätigung zur Durchführung der automatischen Speicherung der IP-Adresse bittet.

Endgeräte, insbesondere zur Umsetzung des erfindungsgemäßen Verfahrens, die mit einem auf einem Internet-Protokoll basierendem Netzwerk verbindbar sind, können beispielsweise in Form eines Mobiltelefons, eines verdrahteten Telefons, eines stationären Computers oder eines tragbaren Computers bzw. eines PDA (PDA: Personal Digital Assistant = persönlicher digitaler Assistent) ausgeführt sein.

Bevorzugte Ausführungsformen der vorliegenden Erfindung werden nachfolgend Bezugnehmend auf die beiliegenden Zeichnungen näher erläutert. Es zeigen:
Figur 1 eine schematische Abbildung von vier Endgeräten, die über ein auf einem Internet-Protokoll basierenden Netzwerk miteinander verbunden sind;
Figur 2 eine schematische Darstellung der Speicherstruktur auf einer intelligenten Speicherkarte zur Speicherung von IP-Adressen von Endgeräten.

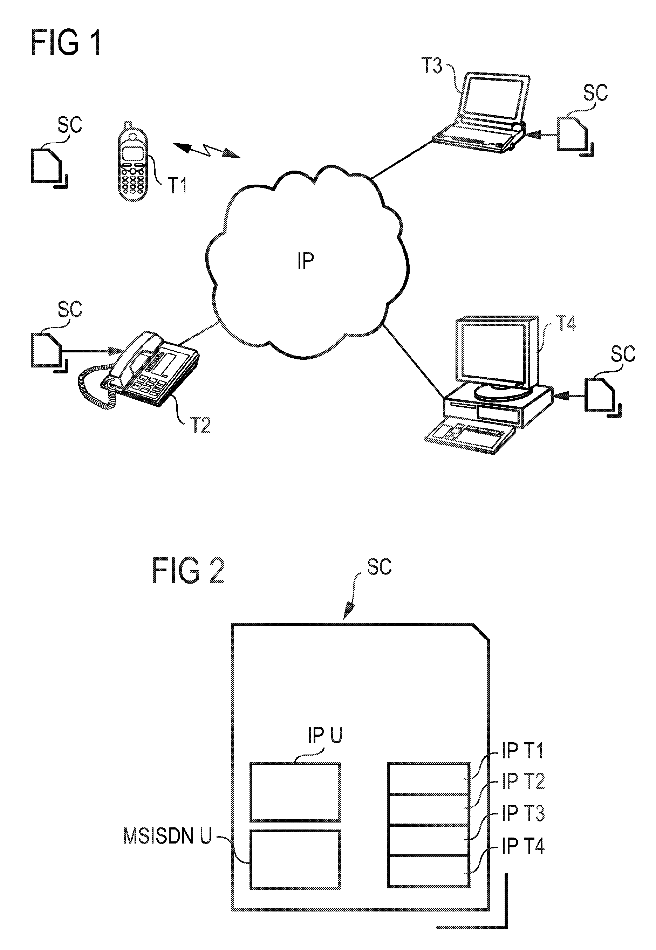

Zur Erläuterung des erfindungsgemäßen Verfahrens zur Herstellung einer Kommunikationsverbindung, sowie der Vorrichtungen zu dessen Umsetzung sei zunächst auf Figur 1 verwiesen.

In Figur 1 sind vier verschiedene Endgeräte bzw. Terminals, nämlich ein Mobilfunkendgerät bzw. Mobiltelefon T1, ein verdrahtetes Telefon T2, ein tragbarer Computer in Form eines Notebooks T3 und ein stationärer Computer T4 gezeigt, die über ein endgerätspezifisches Netzwerk, wie ein Mobilfunknetzwerk für das Mobiltelefon (gekennzeichnet durch das Symbol " 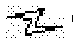 "), ein LAN (LAN: Local Area Network = lokales Netzwerk) für die Computer, usw. (gekennzeichnet durch eine Verbindung mittels einer durchgezogenen Linie) mit einem auf einem Internet-Protokoll basierenden Netzwerk IP, wie beispielsweise dem Internet miteinander verbunden sind. Unter Verwendung des Internet-Protokoll-Standards der Version 6 (IPv6) können alle Endgeräte ihre eigene Statische IP-Adresse aufweisen, die einzigartig bzw. eindeutig für jedes Endgerät ist. Beispielsweise können die jeweiligen Endgeräte T1 bis T4 folgende IP-Adressen aufweisen:

| | |
|---|---|
| T1: | FEDC:BA98:7654:3210:FEDC:BA98:7654:3210 |
| T2: | FEDC:BA98:7654:3210:FEDC:BA98:7654:3211 |
| T3: | FEDC:BA98:7654:3210:FEDC:BA98:7654:3212 |
| T4: | FEDC:BA98:7654:3210:FEDC:BA98:7654:3214 |

Es wird davon ausgegangen, dass, wie für die Zukunft erwartet, jedes Endgerät eine Einrichtung aufweist, um eine intelligente Speicherkarte bzw. Smart Card SC, wie eine SIM-Karte oder eine USIM-Anwendung auf der UICC, aufzunehmen, oder dass ein jeweiliges Endgerät mit einer Leseeinrichtung zum Lesen derartiger Smart Cards SC verbunden ist. In diesem Beispiel kann in das Endgerät T1, das Endgerät T2 und das Endgerät T3 eine Smart Card eingesteckt werden, und hat das Endgerät T4 eine Leseeinrichtung zum Einstecken der Smart Card.

Bevor das erfindungsgemäße Verfahren zum Herstellen einer Kommunikationsverbindung durchgeführt werden kann, muss ein Benutzer zuerst die IP-Adressen der von ihm verwendeten Endgeräte auf seiner Smart Card SC speichern. Dies kann entweder derart durchgeführt werden, dass der Benutzer eines seiner Endgeräte heranzieht, das eine Eingabeeinrichtung, wie beispielsweise eine Tastatur, aufweist, die IP-Adressen manuell eingibt, und diese dann mittels einer an dem Endgerät vorgesehenen Schreibeinrichtung auf die Smart Card SC speichert. Alternativ dazu, ist es auch denkbar, dass ein jeweiliges Endgerät eine Überprüfungseinrichtung aufweist, die überprüft, ob eine Smart Card SC , die mit dem jeweiligen Endgerät verbunden ist, in der Lage ist, IP-Adressen von Endgeräten zu speichern. Zu diesem Zweck ist es vorteilhaft, wenn die Karte in der Lage ist, ihre Fähigkeit anzuzeigen, IP-Adressen eines Endgeräts zu speichern. Nachdem die Überprüfungseinrichtung die Fähigkeit der Smart Card SC bestätigt, IP-Adressen von Endgeräten auf ihr zu speichern, wird die Überprüfungseinrichtung mittels einer Schreibeinrichtung die IP-Adresse des Endgeräts auf der Smart Card SC abspeichern. Vorzugsweise kann die Überprüfungseinrichtung nach der Bestätigung der Speicherfähigkeit der Smart Card SC den Benutzer, beispielsweise mittels einer geeigneten Anzeige, darüber befragen, ob er die IP-Adresse des Endgerätes auf der Smart Card SC speichern möchte oder nicht.

Sind einmal die IP-Adressen der verschiedenen Endgeräte des Benutzers auf der Smart Card gespeichert, so können diese von einem beliebigen der Endgeräte des Benutzers verwendet werden, um ein anderes Endgerät zu adressieren bzw. mit diesem eine Kommunikationsverbindung herzustellen, beispielsweise zum Zweck eines Fernanmeldens (Remote login), eines Fernsteuerns (Remote control) oder zum Bereitstellen von Informationen/Daten bei einem spezifischen Endgerät. Es wird darauf hingewiesen, das das erfindungsgemäße Prinzip nicht darin besteht, irgendwelche Nachrichten, Anrufe, Anweisungen, oder sonstige Daten zu einem anderen Benutzer zu adressieren, sondern um explizit ein spezielles Endgerät/Vorrichtung zu Adressieren bzw. Anzusprechen.

Im folgenden soll nun eine Verwendung des erfindungsgemäßen Verfahrens gemäß einer ersten Ausführungsform erläutert werden. Dabei wird angenommen, dass sich ein Benutzer gerade auf einer Konferenz in Washington/USA befindet und seinen tragbaren Computer in Form eines Notebooks T3 zu dieser Konferenz mitgenommen hat. Als er auf der Konferenz in USA ist, bemerkt er, dass er eine spezielle Software benötigt, die sich auf seinem stationären Bürocomputer T4 in München/Deutschland befindet. Um an die spezielle Software zu gelangen, ist es nötig, das der Benutzer sich von der Ferne bei den Bürocomputer in München anmeldet. Dazu steckt er die Smart Card SC, auf der sämtliche IP-Adressen seiner Endgeräte gespeichert sind, in das Notebook T4, in dem die gespeicherten IP-Adressen gelesen werden. Vorteilhafterweise werden die eingelesenen IP-Adressen des Benutzers auf einer Anzeige in Form einer Menüliste dargestellt, aus der der Benutzer schließlich die IP-Adresse des stationären Bürocomputers T4 auswählen kann. Zur Erleichterung der Auswahl der IP-Adresse bzw. des damit verbundenen Endgeräts ist es vorteilhaft, wenn neben oder anstelle der IP-Adresse eines Endgerätes eine (kurze) Bezeichnung des zugehörigen Endgerätes auf der Smart Card SC oder beispielsweise einem nicht flüchtigen Speichers eines Endgerätes gespeichert ist. Hat der Benutzer die IP-Adresse des Zielendgerätes ausgewählt, so stellt das mit der Smart Card SC verbundene Endgerät, in diesem Fall das Notebook T3, eine Kommunikationsverbindung mit dem Computer T4 her. Der Benutzer ist dann in der Lage, sich von der Ferne aus bei dem Computer T4 anzumelden, und die benötigte spezielle Software auf sein Notebook T3 herunterzuladen. Auf diese Weise ist es für den Benutzer sehr einfach, schnell an die benötigten Daten auf einem weiteren Endgerät zuzugreifen, ohne dass der Benutzer die IP-Adresse des Zielendgerätes, in diesem Fall des Computers T4 selbst kennen muss.

Auf der gleichen Konferenz fällt dem Benutzer ein, dass er die Sprach-Mailbox des verdrahteten Bürotelefons T2, das sich auch in München/Deutschland befindet, abhören muss. Zu diesen Zweck entfernt der Benutzer die Smart Card SC von seinem Notebook T3 und steckt sie in sein Mobiltelefon T1. Entsprechend dem oben beschriebenen Vorgang zum Herstellen einer Kommunikationsverbindung, wie er für das Notebook T3 und den Bürocomputer T4 beschrieben worden ist, kann der Benutzer nun eine Kommunikationsverbindung zwischen dem Mobiltelefon T1 und dem verdrahteten Bürotelefon T2 herstellen. Nach Anrufen des Bürotelefons T2 unter der Verwendung dessen gespeicherter IP-Adresse und Herstellen einer Kommunikationsverbindung kann der Benutzer schließlich die Mailbox des Telefons T2 abhören.

Schließlich möchte der Benutzer noch die Daten auf seinem Mobiltelefon T1 mit den Daten auf seinem Notebook T3 synchronisieren. Zu diesem Zweck wählt der Benutzer die IP-Adresse des Notebooks aus, die gerade auf der mit dem Mobiltelefon T1 verbundenen Smart Card SC gespeichert ist, und stellt eine Kommunikationsverbindung zwischen Mobiltelefon T1 und dem Notebook T3 her. Über die so hergestellte Kommunikationsverbindung können nun die Daten synchronisiert werden.

Im folgenden soll nun eine weitere Verwendung des erfindungsgemäßen Verfahrens gemäß einer zweiten Ausführungsform erläutert werden. Es wird hierbei davon ausgegangen, dass ein Benutzer bei einem Nachrichtendienst angemeldet ist, der ihm ein Nachrichtenkonto bzw. einen Nachrichtenaccount zuweist, welcher im allgemeinen benutzerspezifisch, d. h. vorrichtungsunabhängig ist. Dabei ist es möglich, dass das Mobiltelefon T1, das ein kleines Endgerät ist, eine große Nachricht erhält, welche Daten umfasst, die zu Umfangreich sind, um sie auf der Anzeige des Mobiltelefons T1 darzustellen. Der Benutzer besitzt jedoch ein zweites Endgerät, das in der Lage ist, die oben erwähnten Daten darzustellen. Somit wird der Benutzer seine Smart Card SC mit den IP-Adressen seiner weiteren Endgeräte nehmen, sie mit dem Mobiltelefon T1 verbinden, und ein weiteres Endgerät, wie beispielsweise den Computer T4, auswählen, um mit diesem eine Kommunikationsverbindung aufzubauen. Dadurch ist es dem Benutzer möglich, die umfangreichen Daten von dem Mobiltelefon T1 auf den Computer T4 zu übertragen, um die Daten auf angemessene Weise betrachten oder bearbeiten zu können.

Somit erhält der Benutzer unter Verwendung der Smart Card SC, mit den auf ihr gespeicherten IP-Adressen einen großen Komfort, da er auf die IP-Adressen schnell zugreifen kann. Außerdem muss sich der Benutzer nicht um die IP-Adressen der Endgeräte kümmern, bzw. muss die verschiedenen IP-Adressen nicht selbst wissen.

Zum Schluss sei noch auf Figur 2 verwiesen, die eine schematische Speicheranordnung zur Speicherung der IP-Adressen der Endgeräte auf der Smart Card SC veranschaulicht.

Wie es in Figur 2 zu sehen ist, hat die Smart Card SC eines Benutzers eine Mehrzahl von Speicherbereichen zum Speichern benutzerspezifischer Informationen. Rechts unten auf der Smart Card SC ist beispielsweise ein Speicherblock, bestehend aus den Bereichen IP T1, IP T2, IP T3 und IP T4 dargestellt, in dem die jeweiligen IP-Adressen der Endgeräte T1, T2, T3 bzw. T4 speicherbar sind. Auf der linken unteren Seite der Speicherkarte SC ist ein Speicherbereich MSISDN U vorgesehen, in dem die Telefonnummer des Benutzers gespeichert ist. Darüber befindet sich ein Speicherbereich IP U, in dem eine IP-Adresse eines Benutzers speicherbar ist. Unter dieser IP-Adresse eines Benutzers ist eine IP-Adresse zu verstehen, die einem Benutzer fest zugeordnet ist. Diese IP-Adresse steht einem Benutzer unabhängig davon zur Verfügung, welches Teilnehmerendgerät oder welchen physikalischen Zugang der Benutzer zur Kommunikation wählt.

Offenbart ist ein Verfahren zum Herstellen einer Kommunikationsverbindung zwischen einem ersten Endgerät, das mit einem auf einem Internet-Protokoll basierendem Netzwerk verbunden ist, und einem zweiten Endgerät, das ebenso mit einem auf einem Internet-Protokoll basierendem Netzwerk verbunden ist, offenbart. Gemäß dem Verfahren wird dabei ein Speichermedium, auf dem die IP-Adresse des zweiten Endgeräts gespeichert ist, mit dem ersten Endgerät verbunden. Anschließend wird von dem Speichermedium die IP-Adresse des zweiten Endgeräts eingelesen und schließlich eine Kommunikationsverbindung über das Netzwerk mittels der gelesenen IP-Adresse von dem ersten Endgerät zu dem zweiten Endgerät hergestellt. Dadurch, dass die IP-Adressen der Endgeräte eines Benutzers auf dem Speichermedium gespeichert sind, muss der Benutzer zum Herstellen einer Kommunikationsverbindung zwischen zwei seiner Endgeräte nur das Speichermedium in eines der Endgeräte einführen, wobei automatisch die IP-Adresse des weiteren Endgeräts für die Kommunikationsverbindung ausgelesen wird, ohne das sich der Benutzer eine der IP-Adressen merken muss.

## Patentansprüche

1. Verfahren zum Herstellen einer Kommunikationsverbindung zwischen einem ersten Endgerät (T1, T2, T3, T4), das mit einem auf einem Internet-Protokoll basierenden Netzwerk (IP) verbunden ist, und einem zweiten Endgerät (T1, T2, T3, T4), das mit dem auf einem Internet-Protokoll basierenden Netzwerk (IP) verbunden ist und das eine eigene IP-Adresse aufweist, wobei das Verfahren folgende Schritte aufweist:
Übertragen der IP-Adresse des zweiten Endgeräts (T1, T2, T3, T4) von einem Speichermedium zu dem ersten Endgerät (T1, T2, T3, T4); und
Herstellen einer Kommunikationsverbindung über das Netzwerk (IP) mittels der übertragenen IP-Adresse von dem ersten Endgerät zu dem zweiten Endgerät.

2. Verfahren nach Anspruch 1, das ferner einen Schritt des Übertragens von Daten zwischen dem ersten Endgerät (T1, T2, T3, T4) und dem zweiten Endgerät (T1, T2, T3, T4) aufweist.

3. Verfahren nach Anspruch 1 oder 2, dass ferner einen Schritt des Fernanmeldens an dem zweiten Endgerät und/oder Fernsteuerns des zweiten Endgeräts von dem ersten Endgerät aus aufweist.

4. Verfahren nach einem der Ansprüche 1 bis 3, bei dem das Speichermedium als eine intelligente Speicherkarte ausgebildet ist.

5. Verfahren nach Anspruch 4, bei dem die Speicherkarte als eine SIM-Karte, eine UICC-Karte mit einer USIM-Anwendung oder eine Multimedia-Karte ausgebildet ist.

6. Speichermedium, insbesondere zum Umsetzen des Verfahrens nach einem der Ansprüche 1 bis 5, für ein Endgerät (T1, T2, T3, T4), das mit einem auf einem Internet-Protokoll basierenden Netzwerk (IP) verbindbar ist, wobei das Speichermedium (SC) eine Speichereinrichtung zum speichern zumindest einer IP-Adresse eines Endgeräts aufweist, das mit einem auf einem Internet-Protokoll basierendem Netzwerk (IP) verbindbar ist.

7. Speichermedium nach Anspruch 6, das als intelligente Speicherkarte (SC) ausgebildet ist.

8. Speichermedium nach Anspruch 7, das als eine SIM-Karte, eine UICC-Karte mit einer USIM-Anwendung oder eine Multimedia-Karte ausgebildet ist.

9. Speichermedium nach einem der Ansprüche 6 bis 8, bei dem die IP-Adresse eine auf dem IPv6-Protokoll basierende Adresse ist.

10. Endgerät, das mit einem auf einem Internet-Protokoll basierenden Netzwerk (IP) verbindbar ist, insbesondere zum Umsetzen eines Verfahrens nach einem der Ansprüche 1 bis 9, wobei das Endgerät (T1, T2, T3, T4) folgende Merkmale aufweist:
eine Leseeinrichtung zum Lesen der auf einem Speichermedium (SC), insbesondere nach einem der Ansprüche 6 bis 9, gespeicherten IP-Adresse eines weiteren Endgeräts, das mit einem auf einem Internet-Protokoll basierenden Netzwerk (IP) verbindbar ist,
eine Kommunikationseinrichtung zum Herstellen einer Kommunikationsverbindung mit dem weiteren Endgerät mittels der gelesenen IP-Adresse.

11. Endgerät nach Anspruch 10, das ferner eine Schreibeinrichtung zum Speichern einer IP-Adresse auf das Speichermedium (SC) aufweist.

12. Endgerät beim Anspruch 10 oder 11, das ferner eine Eingabeeinrichtung zum manuellen Eingeben einer IP-Adresse durch einen Benutzer aufweist.

13. Endgerät nach Anspruch 10 oder 11, das ferner eine Überprüfungseinrichtung zum Überprüfen, ob auf dem Speichermedium eine IP-Adresse eines Endgeräts, das mit einem auf einem Internet-Protokoll basierenden Netzwerk (IP) verbindbar ist, speicherbar ist, und zum automatischen Speichern der IP-Adresse, falls die IP-Adresse auf dem Speichermedium speicherbar ist, aufweist.

14. Endgerät nach einem der Ansprüche 10 bis 13, das als ein stationärer Computer, ein tragbarer Computer, ein Mobiltelefon oder ein verdrahtetes Telefon ausgebildet ist.
